**Europäisches Patentamt**

**European Patent Office**

**Office européen des brevets**

(19)

(11) Veröffentlichungsnummer: **0 116 338**

**A1**

(12) ## EUROPÄISCHE PATENTANMELDUNG

(21) Anmeldenummer: 84101034.1

(22) Anmeldetag: 02.02.84

(51) Int. Cl.³: **G 01 N 1/22**

(30) Priorität: 07.02.83 DE 3304018

(43) Veröffentlichungstag der Anmeldung:
22.08.84 Patentblatt 84/34

(84) Benannte Vertragsstaaten:
IT

(71) Anmelder: Rheinische Braunkohlenwerke AG.
Stüttgenweg 2
D-5000 Köln 41(DE)

(72) Erfinder: Dallmann, Winfried, Dr.-Ing.
Florianweg 8
D-5013 Elsdorf-Etzweiler(DE)

(72) Erfinder: Menge, Franz-Josef, Dipl.-Ing.
Xantener Strasse 133
D-5000 Köln 60(DE)

(72) Erfinder: Schubert, Bernhard
Claudiusstrasse 22
D-4047 Dormagen 1(DE)

(74) Vertreter: Koepsell, Helmut, Dipl.-Ing.
Mittelstrasse 7
D-5000 Köln 1(DE)

(54) **Vorrichtung zur Entnahme von Gasproben an einem Behälter.**

(57) Vorrichtung zur Entnahme von Gasproben an einem Schüttgutbehälter mit einer Zellenradschleuse und einem Fühler zur Entnahme der Gasproben, bei welcher in einer Kammer außerhalb der Schleuse ein Meßfühler angeordet ist und über eine Öffnung mit den Zellen der Schleuse in Verbindung steht. Der Meßfühler zur Entnahme der Gasproben ist innerhalb der Kammer so angeordnet, daß er selbst mit einem Schüttgut, dessen Gasanteile gemessen werden, nicht in Berührung kommt. Hierzu dient auch ein Abweisblech, welches in die Kammer eintretendes Schüttgut in den Bereich der Zellenradschleuse zurückleitet. Der Meßfühler ist als Filterschlauch ausgebildet und mit einer Schütteleinrichtung versehen, mit deren Hilfe er von anhaftendem Staub befreit wird.

FIG.1

EP 0 116 338 A1

Croydon Printing Company Ltd.

Gasen stößt auf Schwierigkeiten, wenn es sich um die Feststellung dieser Gase im unteren Bereich bzw. während der Entleerung des Behälters handelt. Dieser Bereich ist sehr schwer zugänglich und kann deshalb von Meßsonden bisher nur unzureichend erfaßt werden. Eine weitere Schwierigkeit ergibt sich dadurch, daß bekannte Meßsonden nicht stationär im Behälter angeordnet werden können und somit nur für zeitlich und örtlich eng begrenzte Meßvorgänge geeignet sind.

Aus diesen Schwierigkeiten resultiert die Aufgabe der Erfindung, ein Meßorgan zur Feststellung der Anwesenheit von Gasen im unteren Bereich bzw. während der Entleerung eines Schüttgutbehälters zu schaffen, welches in der Lage ist, über einen längeren Zeitraum kontinuierlich Meßwerte zu liefern.

Gemäß der Erfindung wird diese Aufgabe dadurch gelöst, daß ein Meßfühler in einer Kammer außerhalb des Austragsorganes des Behälters angeordnet ist und mit diesem Organ über eine Öffnung in Verbindung steht. Dementsprechend wird der Meßfühler zur Messung der Anwesenheit von Gasen außerhalb des Austragsorganes des Behälters so angeordnet, daß das aus dem Behälter austretende Schüttgut in der Nähe des Meßfühlers vorbeigeführt wird, wodurch dieser die Möglichkeit hat, laufend Gasproben aus dem vorbeiströmenden Schüttgut zu entnehmen. Diese Vorrichtung hat sich besonders vorteilhaft erwiesen bei der Anwendung an Schüttgutbehältern, in denen Stäube, z. B. Kohlenstaub, gelagert sind. Das in dem Kohlentaub entstandene Gas wird zusammen mit dem Staub ausgetragen und von dem Fühler der selbst nicht in den Schüttgutstrom hineinragt, angesaugt, so daß die Anwesenheit kritischer Gasbestandteile mit Sicherheit festgestellt

...

Rheinische Braunkohlenwerke AG.


Vorrichtung zur Entnahme von Gasproben an einem Behälter


Die vorliegende Erfindung betrifft eine Vorrichtung zur Entnahme von Gasproben an einem Behälter für staubförmige oder körnige Schüttgüter, der ein Organ zum Austrag der Schüttgüter aufweist, sowie einen Fühler zur Entnahme der Gasproben.

Eine Vielzahl von Schüttgütern, insbesondere von staubförmigen Schüttgütern, wird in geschlossenen Behältern gelagert. Diese Behälter sind mit einem Einfüllstutzen und mit einem Entleerungsstutzen versehen, wobei der Entleerungsstutzen häufig als Zellenradschleuse ausgebildet ist. Derartige Zellenradschleusen eignen sich besonders an Schüttgutbehältern für staubförmiges Gut oder für Güter, die unter inerter Gasatmosphäre oder sonstigen besonderen technischen Bedingungen gelagert werden. Außer zur Lagerung können derartige Behälter auch zum Transport der Schüttgüter geeignet sein.

Einige Schüttgüter, insbesondere Stäube, neigen zur Selbstentzündung und entwickeln, bevor es zur Entzündung kommt, Gase, die aus dem Schüttgut austreten. Anhand der sich entwickelnden Gase kann z. B. auf eine bevorstehende Brandgefahr geschlossen werden. Wiederum andere Schüttgüter benötigen zur Lagerung die Anwesenheit einer inerten Gasatmosphäre. Hierbei muß sichergestellt sein, daß das inerte Gas stets in ausreichenden Mengen vorhanden ist. Die Messung des Vorhandenseins von aus dem Schüttgut austretenden, eine Brandgefahr anzeigenden Gasen sowie von inerten

...

werden kann, wobei gewährleistet ist, daß der Meßfühler durch die Feinanteile der Stäube nicht zugesetzt wird und daher während der gesamten Meßdauer wirksam bleibt.

Vorteilhafterwese wird die Kammer, in welcher der Meßfühler angeordnet ist, außerhalb der die Zellen der Zellenradschleuse begrenzenden Außenwand angeordnet und die die Zellenradschleue mit der Kammer verbindende Öffnung in dieser Außenwand angebracht. Hierdurch wird gewährleistet, daß die Kammer mit dem Meßfühler von dem vorbeigeführten Schüttgutstrom selbst nicht beaufschlagt wird, jedoch die Gase, auf deren Messung es ankommt, frei und ungehindert in den Innenraum der Kammer eintreten können.

Zweckmäßigerweise wird deshalb auch der Meßfühler etwas oberhalb - in Austragsrichtung gesehen - der Verbindungsöffnung zwischen der Zellenradwand und der Kammer angeordnet, wodurch sichergestellt ist, daß infole der Schwerkraft der Schüttgutstrom nicht mit dem Meßfühler selbst in Berührung kommen kann. Vorteilhafterweise wird diese Anordnung noch durch ein Abweisblech unterstützt, welches in Richtung auf die Verbindungsöffnung zwischen der Zellenradschleuse und der Meßkammer geneigt ist und das Schhüttgut daran hindert, in die Kammer einzudringen und sich darin abzulagern.

Als Meßfühler hat sich ein Filterschlauch bewährt, der im wesentlichen aus einem in Richtung parallel zur Achse des Zellenrades der Schleuse abgewinkelten Rohrende besteht, welches von einem in der axialen Verlängerung des Rohrendes fortgeführten Filterkorb verschlossen wird.

Nachfolgend wird die Erfindung anhand eines Ausführrngsbeispiels beschrieben. Es zeigen:

...

Fig. 1    einen Ausschnitt aus einem Organ zum Austrag im
         Schnitt und

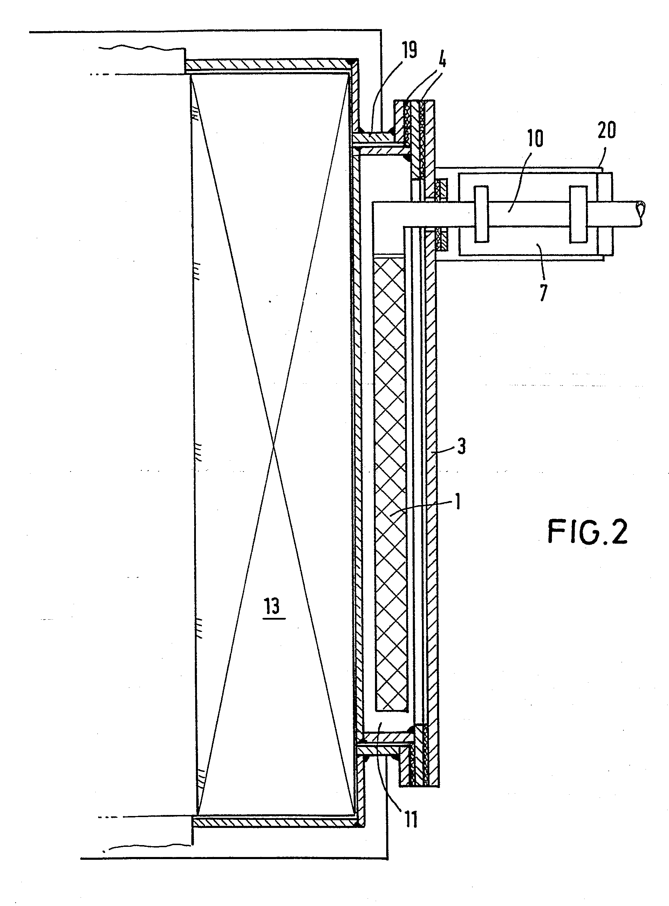

Fig. 2    einen Schnitt nach der Linie II-II der Fig. 1.


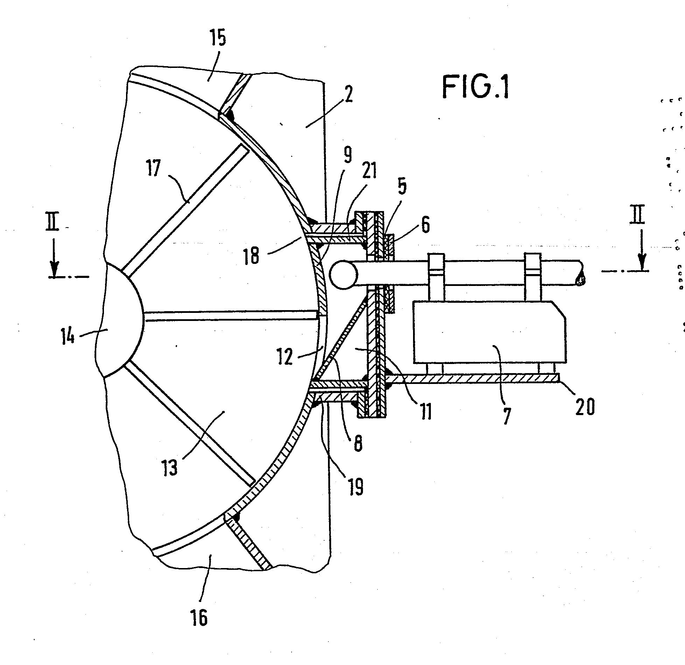

Bei dem in Fig. 1 im Schnitt dargestellten Austragsorgan eines Schüttgutbehälters handelt es sich um eine Zellenradschleuse 2. Die Schleuse besteht aus einem Zellenrad 14, welches in dem Gehäuse der Schleuse 2 drehbar gelagert ist und als Verbindungsglied zwischen dem Auslaßstutzen 15 des Schüttgutbehälters (nicht dargestellt) und einem Auslauf 16 für das Schüttgut angeordnet ist. Zwischen den Flügeln 17 des Zellenrades 14 und dem Gehäuse der Schleuse 2 werden einzelne Zellen 13 gebildet, die unter Drehung des Zellenrades 14 das Schüttgut portionsweise vom Auslaßstutzen 15 zum Auslauf 16 fördern.

Entsprechend der Erfindung ist in die den Umfang des Zellenrades 14 begrenzende Außenwand der Zellenradschleuse 12 eine Öffnung 18 eingebracht, die sich im wesentlichen ununterbrochen über die gesamte axiale Breite des Zellenrades 14 erstreckt. Im Bereich der Öffnung 18 der Gehäusewand der Zellenradschleuse 2 ist ein Flansch 19 vorgesehen, der durch einen Deckel 3 verschlossen ist. Zwischen dem Flansch 19 und dem Deckel 3 sind Dichtungen 4 angeordnet, die die innerhalb des Flansches 19 gebildete Kammer 11 nach außen hin dicht abschließen. Der Deckel 3 ist innenseitig mit einem Fortsatz 21 versehen, der einen in Verlängerung der Schleusenwandung verlaufenen Wandabschnitt 9 trägt, der die Öffnung 18 in der Gehäusewand der Zellenradschleuse 2 teilweise unter Belassung einer Öffnung 12 abschließt, über die das Innere der Kammer 11 mit der Zelle 13 in Verbindung steht. Der Wandabschnitt 9 ist so bemessen, daß eine in diesem Bereich befindliche Zelle 13 umfangsseitig jeweils zwischen dem Auslaßstutzen 15 und der Kammeröffnung 12 mit

...

ausreichender Überdeckung verschlossen ist um zu gewährleisten, daß das Schüttgut aus dem Behälter nicht in die Meßkammer 11 durchschießen kann.

Am unteren Rand der Öffnugn 12 schließt sich ein Abweisblech 8 an, welches schräg unter einem Winkel von etwa 70° nach oben gerichtet in die Kammer 11 hineinragt und seine obere Begrenzung am Deckel 3 oberhalb der oberen Begrenzung der Öffnung 12 findet. Durch das Abweisblech 8 wird die Kammer 11 in zwei annähernd im Querschnitt dreieckförmige Räume unterteilt.

In dem dreieckförmigen Raum oberhalb des Abweisbleches 8 ist ein Meßfühler 1 angeordnet. Dieser Meßfühler besteht aus einem Saugrohr 10, welches durch eine Öffnung im Deckel 3 mit einer Verlängerung in die Kammer 11 hineinragt. Diese Verlängerung ist als Filterschlauch 1 ausgebildet, der gegenüber dem Absaugrohr 10 um einen rechten Winkel abgebogen ist und sich längs durch die Kammer 11 in Richtung parallel zur Achse des Zellenrades 14 erstreckt. Der Filterschlauch erstreckt sich im wesentlichen über den größten Teil der axialen Länge der Schleusenkammer 13. Außerhalb des Deckels 3 ist das Absaugrohr 10 auf einem Vibrator 7 gelagert, der seinerseits auf einer konsolenartigen Verlängerung 20 am Deckel 3 befestigt ist. Die Durchführung des Absaugrohres 10 durch den Deckel 3 ist so ausgebildet, daß die dem Absaugrohr 10 durch den Vibrator 7 erteilten Schwingungen nicht behindert werden und gleichzeitig die Dichtheit der Kammer 11 gewahrt wird. Durch die Anordnung des Filterschlauches 1 im oberen Teil der Kammer 11, d. h. oberhalb der Öffnung 12, und das Vorhandensein des Abweisbleches 8 ist gewährleistet, daß Schüttgut nicht bis an das Filterrohr 1 gelangen kann.

Der Betrieb der Zellenradschleuse 2 wird durch die Anordnung der Kammer 1 nicht beeinträchtigt. Teile des Schüttgutes, die durch die Öffnung 12 in die Kammer 11 eindringen, werden vom Abweisblech 8 durch dessen Schräglage aus der Kammer 11 immer wieder abgeleitet. Hierdurch ist gewährleistet, daß innerhalb der Kammer 11 keine Ansammlung von Schüttgut, welches mit dem Zellenrad 14 transportiert wird, entsteht, so daß an der Meßeinrichtung 1 ständig frisches Schüttgut vorbeigeführt wird. Über das Absaugrohr 10 wird der Filterschlauch 1 mit einem Unterdruck beaufschlagt, wodurch Gase aus dem Schüttgut angesaugt und über das Absaugrohr 10 einer Meßeinrichtung zugeführt werden können. Diese hier nicht dargestellte Meßeinrichtung analysiert sodann die im Schüttgut vorhandenen Gase und deren Zusammensetzung. Aus dieser Analyse werden Erkenntnisse über den Zustand des Schüttgutes bzw. dessen Inertisierungsphase gewonnen. Anstelle der vorgesehenen Reinigung des Filterschlauches 1 durch Schütteln mit dem Vibrator 7 kann dessen Reinigung auch pneumatisch erfolgen, indem er über das Ansaugrohr 10 mit einem entgegengerichteten Gas- oder Luftstrom beaufschlagt wird. Die Reinigung kann mit Hilfe des Vibrators kontinuierlich, d. h. sogar während des Meßbetriebes durchgeführt werden; sie kann aber auch nach jedem Meßvorgang pneumatisch mit Luft oder Inertgas erfolgen, oder der Filterschlauch kann abgeklopft werden.

Durch den Vibrator 7 ist gewährleistet, daß feine Staubteilchen, die sich am Filterrohr 1 insbesondere bei der Messung von staubförmigen Schüttgütern ansetzen, ständig abgeschüttelt werden, so daß der Filterschlauch 1 nicht verstopft.

...

Patentansprüche:
================================

1. Vorrichtung zur Entnahme von Gasproben an einem Behälter für Schüttgüter mit einem Organ zum Austragen derselben und einem Fühler zur Entnahme der Gasproben, dadurch gekennzeichnet, daß der Fühler (10) in einer Kammer (11) außerhalb des Organes zum Austrag angeordnet ist und damit über eine Öffnung (12) in Verbindung steht.

2. Vorrichtung nach Anspruch 1, dadurch gekennzeichnet, daß das Austragsorgan als Zellenradschleuse (22) ausgebildet und die Öffnung (12) in der die Zellen (13) begrenzenden Außenwand (9) der Schleuse (2) angeordnet ist.

3. Vorrichtung nach Anspruch 1, dadurch gekennzeichnet, daß der Fühler (10) oberhalb der Öffnung (12) in der Kammer (11) angeordnet und die Kammer unterhalb des Fühlers (10) mit einem Abweisblech (8) versehen ist.

4. Vorrichtung nach einem der vorhergehenden Ansprüche dadurch gekennzeichnet, daß der Fühler als Filterschlauch (1) ausgebildet ist.

5. Vorrichtung nach Anspruch 4, dadurch gekennzeichnet, daß dem Fühler (10) eine Schütteleinrichtung (7) und ein Absaugrohr zugeordnet sind.

...

FIG.1

FIG.2

0116338

-2/2-

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-1 555 772 (BRITISH STEEL CORP.)<br>* Seite 1, rechte Spalte, Zeilen 73-85; Figuren 1-3 *<br><br>--- | 1 | G 01 N 1/22 |
| A | US-A-3 861 116 (K. DOMKE)<br>* Spalte 4, Anspruch 1 *<br><br>----- | 1 | |

|  |
|---|
| RECHERCHIERTE SACHGEBIETE (Int. Cl. 3) |
| G 01 N 1/00 |

Der vorliegende Recherchenbericht wurde für alle Patentansprüche erstellt.

| Recherchenort<br>DEN HAAG | Abschlußdatum der Recherche<br>10-05-1984 | Prüfer<br>ERRANI C. |
|---|---|---|